# EUROPEAN PATENT APPLICATION

(11) **EP 4 443 831 A1**
(43) Date of publication of application: **09.10.2024**
(21) Application number: 22900340.5
(22) Date of filing: 23.11.2022
(51) Int. Cl.: H04L 41/0823

(54) **INFORMATION INTERACTION METHOD AND APPARATUS, AND COMMUNICATION DEVICE**

(30) Priority: 30.11.2021 CN 202111443949
(71) Applicant: VIVO MOBILE COMMUNICATION CO., LTD., Dongguan, Guangdong 523863 (CN)
(72) Inventor: SUN, Peng, Dongguan, Guangdong 523863 (CN)
(74) Representative: Conti, Marco
(86) International application number: PCT/CN2022/133713
(87) International publication number: WO 2023/098535

(57) **Abstract**

This application discloses an information interaction method and apparatus, and a communication device, which relates to the field of communication technologies. The information interaction method in embodiments of this application includes: sending, by a first communication device, first processing resource information; and performing, by the first communication device, information interaction with at least one target communication device according to the first processing resource information, where the first processing resource information is used for indicating at least one of the following: available resource information of the first communication device for running a target algorithm, the target algorithm including at least one of a neural network algorithm, an artificial intelligence algorithm, and a machine learning algorithm; and a target algorithm set supported by the first communication device.

## Description

### CROSS-REFERENCE TO RELATED APPLICATIONS

This application claims priority to Chinese Patent Application No. 202111443949.5, filed in China on November 30, 2021, which is incorporated herein by reference in its entirety.

### TECHNICAL FIELD

This application relates to the field of communication technologies, and specifically, to an information interaction method and apparatus, and a communication device.

### BACKGROUND

When artificial intelligence (artificial intelligence, AI) is applied to a wireless communication system, a corresponding neural network needs to be run on a terminal. However, a network side node does know computing power of the neural network, a time period for running the neural network by the terminal, and the like, making it difficult to configure, for the terminal, a neural network matching a running resource of the terminal. As a result, it is difficult for a neural network model used by the terminal to match the running resource of the terminal.

### SUMMARY

Embodiments of this application provide an information interaction method and apparatus, and a communication device, which can resolve a problem of how to ensure that a neural network model used by a terminal matches a running resource of the terminal.

According to a first aspect, an information interaction method is provided, including:
sending, by a first communication device, first processing resource information; and
performing, by the first communication device, information interaction with at least one target communication device according to the first processing resource information, where
the first processing resource information is used for indicating at least one of the following:
available resource information of the first communication device for running a target algorithm, where the target algorithm includes at least one of a neural network algorithm, an artificial intelligence algorithm, and a machine learning algorithm; and
a target algorithm set supported by the first communication device.

According to a second aspect, an information interaction method is provided, including:
obtaining, by a second communication device, first processing resource information sent by a first communication device; and
performing, by the second communication device, interaction with a target communication device according to the first processing resource information, the target communication device including at least one of the first communication device and a third communication device, where
the first processing resource information is used for indicating at least one of the following:
available resource information of the first communication device for running a target algorithm, where the target algorithm includes at least one of a neural network algorithm, an artificial intelligence algorithm, and a machine learning algorithm; and
a target algorithm set supported by the first communication device.

According to a third aspect, an information interaction method is provided, including:
obtaining, by a third communication device, first interaction information sent by a target communication device, where the first interaction information includes at least one of second processing resource information and target algorithm recommendation information, the second processing resource information being used for indicating resource information of a first communication device for running a target algorithm, and the target communication device includes at least one of a second communication device and the first communication device; and
performing, by the third communication device, information interaction with the target communication device according to the first interaction information.

According to a fourth aspect, an information interaction apparatus is provided, including:
a first transceiver module, configured to send first processing resource information; and
a first interaction module, configured to perform information interaction with at least one target communication device according to the first processing resource information, where
the first processing resource information is used for indicating at least one of the following:
available resource information of the first communication device for running a target algorithm, where the target algorithm includes at least one of a neural network algorithm, an artificial intelligence algorithm, and a machine learning algorithm, and
a target algorithm set supported by the first communication device.

According to a fifth aspect, an information interaction apparatus is provided, including:
a first obtaining module, configured to obtain first processing resource information sent by a first communication device; and
a second interaction module, configured to perform interaction with a target communication device according to the first processing resource information, the target communication device including at least one of the first communication device and a third communication device, where
the first processing resource information is used for indicating at least one of the following:
available resource information of the first communication device for running a target algorithm, where the target algorithm includes at least one of a neural network algorithm, an artificial intelligence algorithm, and a machine learning algorithm; and
a target algorithm set supported by the first communication device.

According to a sixth aspect, an information interaction apparatus is provided, including:
a second obtaining module, configured to obtain first interaction information sent by a target communication device, where the first interaction information includes at least one of second processing resource information and target algorithm recommendation information, the second processing resource information being used for indicating resource information of a first communication device for running a target algorithm, and the target communication device includes at least one of a second communication device and the first communication device; and
a third interaction module, configured to perform information interaction with the target communication device according to the first interaction information.

According to a seventh aspect, a communication device is provided, including a processor and a memory, the memory storing a program or instructions runnable on the processor, the program or instructions, when executed by the processor, performing the steps of the method according to the first aspect, the second aspect, or the third aspect.

According to an eighth aspect, a communication device is provided, including a processor and a communication interface, where the communication interface is configured to: send first processing resource information, and perform information interaction with at least one target communication device according to the first processing resource information; or obtain first processing resource information, and perform interaction with a target communication device according to the first processing resource information, the target communication device including at least one of a first communication device and a third communication device; or obtain first interaction information sent by a target communication device, where the first interaction information includes at least one of second processing resource information and target algorithm recommendation information, the second processing resource information being used for indicating resource information of a first communication device for running a target algorithm, and the target communication device includes at least one of a second communication device and the first communication device, and perform information interaction with the target communication device according to the first interaction information. The first processing resource information is used for indicating at least one of the following: available resource information of the first communication device for running a target algorithm, the target algorithm including at least one of a neural network algorithm, an artificial intelligence algorithm, and a machine learning algorithm; and a target algorithm set supported by the first communication device.

According to a ninth aspect, a communication system is provided, including a first communication device, a second communication device, and a third communication device, where the first communication device may be configured to perform the steps of the information interaction method according to the first aspect, the second communication device may be configured to perform the steps of the information interaction method according to the second aspect, and the third communication device may be configured to perform the steps of the information interaction method according to the third aspect.

According to a tenth aspect, a readable storage medium is provided, storing a program or instructions, the program or instructions, when executed by the processor, implementing the steps of the method according to the first aspect, the second aspect, or the third aspect.

According to an eleventh aspect, a chip is provided, including a processor and a communication interface, the communication interface being coupled to the processor, and the processor being configured to run a program or instructions to implement the steps of the method according to the first aspect, the second aspect, or the third aspect.

According to a twelfth aspect, a computer program/program product is provided, stored in a storage medium, where the computer program/program product is executed by at least one processor to implement the steps of the method according to the first aspect, the second aspect, or the third aspect.

According to a thirteenth aspect, a communication device is provided, configured to perform the steps of the method according to the first aspect, the second aspect, or the third aspect.

In the embodiments of this application, after the first communication device sends the first processing resource information, another communication device can determine, based on the first processing resource information, the available resource information and/or the supported target algorithm set (for example, a supported neural network set), and the like of the first communication device. In this way, interaction is subsequently performed based on the first processing resource information, and a target algorithm used by the first communication device can be determined, for example, a target neural network model used by the first communication device, so that the neural network model used by the first communication device is a neural network model matching a resource capability of the first communication device.

### BRIEF DESCRIPTION OF THE DRAWINGS

FIG. 1 is a structural diagram of a communication system to which an embodiment of this application is applicable;
FIG. 2 is a first schematic flowchart of an information interaction method according to an embodiment of this application;
FIG. 3 is a second schematic flowchart of an information interaction method according to an embodiment of this application;
FIG. 4 is a third schematic flowchart of an information interaction method according to an embodiment of this application;
FIG. 5 is a first schematic diagram of modules of an information interaction apparatus according to an embodiment of this application;
FIG. 6 is a first structural block diagram of a communication device according to an embodiment of this application;
FIG. 7 is a second structural block diagram of a communication device according to an embodiment of this application;
FIG. 8 is a second schematic diagram of modules of an information interaction apparatus according to an embodiment of this application;
FIG. 9 is a third schematic diagram of modules of an information interaction apparatus according to an embodiment of this application;
FIG. 10 is a first structural block diagram of a network side device according to an embodiment of this application; and
FIG. 11 is a second structural block diagram of a network side device according to an embodiment of this application.

### DETAILED DESCRIPTION

The following clearly describes the technical solutions in the embodiments of this application with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

In the specification and the claims of this application, the terms "first", "second", and so on are intended to distinguish similar objects but do not necessarily indicate a specific order or sequence. It is to be understood that the term used in such a way is interchangeable in proper circumstances, so that the embodiments of this application can be implemented in other sequences than the sequence illustrated or described herein. In addition, the objects distinguished by "first", "second", and the like are usually of one type, and a quantity of objects is not limited, for example, there may be one or more first objects. In addition, "and/or" used in the specification and the claims represents at least one of the connected objects, and a character "/" in this specification generally indicates an "or" relationship between the associated obj ects.

It is to be noted that, the technologies described in the embodiments of this application are not limited to a long term evolution (long term evolution, LTE)/LTE-Advanced (LTE-advanced, LTE-A) system, or may be applied to other wireless communication systems such as code division multiple access (code division multiple access, CDMA), time division multiple access (time division multiple access, TDMA), frequency division multiple access (frequency division multiple access, FDMA), orthogonal frequency division multiple access (orthogonal frequency division multiple access, OFDMA), single-carrier frequency-division multiple access (single-carrier frequency-division multiple access, SC-FDMA), and another system. In the embodiments of this application, the terms "system" and "network" are usually interchangeably used, and the technology described herein can be applied to the systems and radio technologies mentioned above, and can also be applied to other systems and radio technologies. Although the technologies are also applicable to applications other than NR system applications, for example, a 6th generation (6th Generation, 6G) communication system, a new radio (new radio, NR) system is exemplarily described in the following descriptions, and the term "NR" is used in most of the following descriptions.

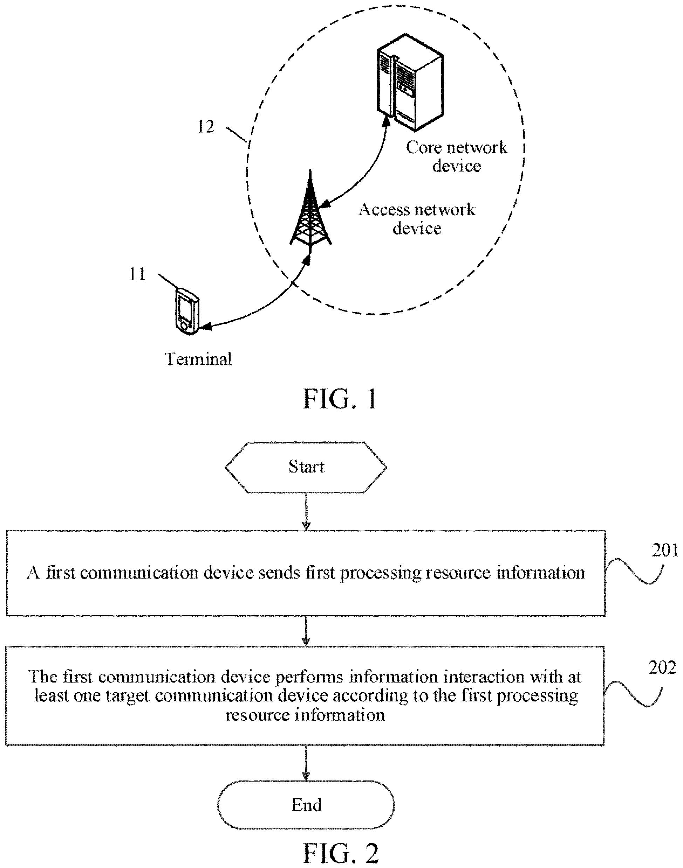

FIG. 1 shows a block diagram of a wireless communication system to which an embodiment of this application is applicable. The communication system includes a terminal 11 and a network side device 12. The terminal 11 may be a terminal side device such as a mobile phone, a tablet personal computer (tablet personal computer), a laptop computer (laptop computer) or notebook computer, a personal digital assistant (personal digital assistant, PDA), a palmtop computer, a notebook, an ultra-mobile personal computer (ultra-mobile personal computer, UMPC), a mobile Internet device (mobile Internet device, MID), an augmented reality (augmented reality, AR)/virtual reality (virtual reality, VR) device, a robot, a wearable device (a wearable device), a vehicle user equipment (vehicle user equipment, VUE), a pedestrian user equipment (pedestrian user equipment, PUE), a smart household (which is a household device having a wireless communication function, for example, a refrigerator, a television, a washing machine, or furniture), a game console, a personal computer (personal computer, PC), a teller machine, self-service machine, or the like. The wearable device includes: a smart watch, a smart bracelet, a smart headset, smart glasses, smart jewelry (a smart bangle, a smart chain bracelet, a smart ring, a smart necklace, a smart ankle bangle, a smart anklet, or the like), a smart wristband, smart clothing, and the like. It is to be noted that, a specific type of the terminal 11 is not limited in the embodiments of this application. The network side device 12 may include an access network device or a core network device. The access network device may also be referred to as a radio access network device, a radio access network (radio access network, RAN), a radio access network function, or a radio access network unit. The access network device may include a base station, a wireless local area network (wireless local area network, WLAN) access point, a wireless fidelity (wireless fidelity, Wi-Fi) node, or the like. The base station may be referred to as a node B, an evolved node B (eNB), an access point, a base transceiver station (base transceiver station, BTS), a radio base station, a radio transceiver, a basic service set (basic service set, BSS), an extended service set (extended service set, ESS), a home node B, a home evolved node B, a transmitting receiving point (transmitting receiving point, TRP), or another suitable term in the field. The base station is not limited to a specific technical term as long as the same technical effect is achieved. It is to be noted that, in the embodiments of this application, the base station in the NR system is only used as an example for description, but a specific type of the base station is not limited. The core network device may include, but not limited to at least one of the following: a core network node, a core network function, a mobility management entity (mobility management entity, MME), an access and mobility management function (access and mobility management function, AMF), a session management function (session management function, SMF), a user plane function (user plane function, UPF), a policy control function (policy control function, PCF), a policy and charging rules function (policy and charging rules function, PCRF), an edge application server discovery function (edge application server discovery function, EASDF), a unified data management (unified data management, UDM), a unified data repository (unified data repository, UDR), a home subscriber server (home subscriber server, HSS), centralized network configuration (centralized network configuration, CNC), a network repository function (network repository function, NRF), a network exposure function (network exposure function, NEF), a local NEF (local NEF, or L-NEF), a binding support function (binding support function, BSF), an application function (application function, AF), and the like. It is to be noted that, in the embodiments of this application, the core network device in the NR system is only used as an example for description, but a specific type of the core network device is not limited.

With reference to the accompanying drawings, the information interaction method provided in the embodiments of this application is described in detail below by using some embodiments and application scenarios thereof.

As shown in FIG. 2, an embodiment of this application provides an information interaction method, including:
Step 201: A first communication device sends first processing resource information.
the first processing resource information is used for indicating at least one of the following:
   available resource information of the first communication device for running a target algorithm, where the target algorithm includes at least one of a neural network algorithm, an artificial intelligence algorithm, and a machine learning algorithm, and the target algorithm may specifically include a training algorithm, an inference algorithm, and the like; and
   a target algorithm set supported by the first communication device. Optionally, the target algorithm set includes at least one of the following:
      a set of neural network models;
      a set of algorithms for performing inference based on a specific neural network; and
      a set of algorithms for training based on the specific neural network.

In this step, the first communication device may send the first processing resource information to at least one communication device.

In this embodiment of this application, the available resource information of the first communication device for running the target algorithm and/or the target algorithm set supported by the first communication device may be indicated by using at least one piece of information included in the first processing resource information.

Step 202: The first communication device performs information interaction with at least one target communication device according to the first processing resource information.

Information interaction performed in this embodiment of this application may include receiving information and/or sending information.

In the embodiments of this application, after the first communication device sends the first processing resource information, another communication device can determine, based on the first processing resource information, the available resource information and/or the supported target algorithm set (for example, a supported neural network set), and the like of the first communication device. In this way, interaction is subsequently performed based on the first processing resource information, and a target algorithm used by the first communication device can be determined, for example, a target neural network model used by the first communication device, so that the neural network model used by the first communication device is a neural network model matching a resource capability of the first communication device.

Optionally, the performing, by the first communication device, information interaction with at least one target communication device according to the first processing resource information includes:
receiving, by the first communication device, configuration information of the target algorithm from the at least one target communication device, where the configuration information of the neural network algorithm includes configuration information of a neural network model.

In this embodiment of this application, before sending the first processing resource information, the first communication device may obtain the configuration information of the target algorithm, and send the first processing resource information based on the configuration information.

In this embodiment of this application, after the first communication device obtains the configuration information of the target algorithm, a target algorithm used by the first communication device may be selected according to the configuration information, and the target algorithm is notified to another communication device, so that the another communication device may make reference when subsequently configuring the target algorithm for the first communication device.

Optionally, the configuration information includes at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library. The neural network model library may include at least one neural network model.

Optionally, the performing, by the first communication device, information interaction with at least one target communication device according to the first processing resource information further includes:
sending, by the first communication device, first interaction information to the at least one target communication device according to the configuration information of the target algorithm, where the first interaction information includes at least one of second processing resource information and target algorithm recommendation information, the second processing resource information being used for indicating resource information of the first communication device for running the target algorithm.

In an embodiment of this application, after the first communication device sends the first processing resource information to a second communication device, the second communication device determines the configuration information according to the first processing resource information and sends the configuration information to the first communication device, the first communication device sends the first interaction information to the second communication device based on the configuration information, and the second communication device further determines, based on the first interaction information, the neural network model used by the first communication device. In this way, through several rounds of interaction between the first communication device and the second communication device, a neural network model matching a neural network running capability of the first communication device is configured for the first communication device.

Optionally, the first processing resource information includes at least one of the following:
an activation function type supported by the first communication device, where the activation function type includes but is not limited to at least one of an S-shaped growth curve (Sigmoid) function, a hyperbolic tangent (Tanh) function, a Rectified Linear Unit (rectified linear unit, ReLU) function, a leaky-ReLU (leaky-ReLU, LReLU) function, an exponential linear unit (Exponential Linear Unit, ELU) function, a Gaussian error linerar unit (Gaussian error linerar unit, GELU) function, and a normalized exponential (Softmax) function.
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period including at least one time unit, where optionally, a unit of the time unit is at least one of a unit of time, a subcarrier space, a timeslot, and a frame, and the unit of time may be milliseconds (ms), seconds (s), or the like, for example, a quantity of operation times supported within 1 ms or 10 ms or a preset time set is reported;
a relationship between the quantity of operation times supported within the first target time period and a quantity of operation times supported within a second target time period, the second target time period including at least one time unit, and the time unit included in the second target time period being different from the time unit included in the first target time period, where for example, the quantity of operation times supported within the first target time period is N times the quantity of operation times supported within the second target time period, N being obtained by performing conversion according to a time length relationship between the first target time period and the second target time period; and if N has a plurality of values (assuming that the first target time period includes time units corresponding to a plurality of time granularities), a value may be determined from the plurality of values according to a predefined rule, for example, a minimum value, a maximum value, or an average value is selected;
a time period required for completing a specific operation of a specific target by the first communication device, where the specific target includes a target quantity of times, the target quantity of times may be specified in a protocol or configured through a network, the specific operation may be an operation, and during reporting, a time period required for completing at least one operation of the specific target may be reported, to be specific, only the time period required for completing at least one operation of the specific target may be reported, or time periods required for completing different operations of the specific target may be respectively reported; the specific operation may further be a plurality of operation combinations, and during reporting, a time period required for completing at least one operation combination of the specific target may be reported, or a time period required for completing each algorithm combination of the specific target may be reported; in addition, the time period required for completing a specific operation of a specific target by the first communication device may alternatively be determined according to a preset conversion rule, for example, conversion is performed according to a quantity of operation times, assuming that a time period required for the first communication device to complete the specific operation of the specific target is T0, and a time period required for completing a specific operation A is M1 times T0, the first communication device may report that the time period required for completing the specific operation A is M1 times T0; in another example, the specific operation is an operation combination, a time period required for the first communication device to complete a specific operation combination (including an operation Al and an operation A2) of the specific target is T1, a time period required for completing the specific operation Al is M2 times T0, and a time period required for completing the specific operation A2 is M3 times T0, T1 may be converted into T0 according to a smaller or larger value of M2 and M3, for example, M2 is less than M3, and T1 is converted into M2 times T0; and in another example, the specific operation includes a plurality of operation combinations, assuming that the operation combinations includes an operation combination 1 and an operation combination 2, where a time period required for completing the operation combination 1 is M4 times T0, and a time period required for completing the operation combination 2 is M5 times T0, a smaller or larger value of M4 and M5 may be selected to convert a time period required for completing the plurality of operation combinations into a preset multiple of T0;
information about the hyperoperation supported by the first communication device, where the information about the hyperoperation includes a hyperoperation type and a parameter corresponding to the hyperoperation type, for example, the hyperoperation type is a specific operation combination such as a convolution operation, and a parameter corresponding to the convolution operation is a kernel size and an operation capability corresponding to the hyperoperation, the operation capability including a time period required for completing a specific hyperoperation or a quantity of hyperoperations completed per unit time;
information about the neural network model supported by the first communication device, where the information about the neural network model includes a neural network model type and a parameter corresponding to the neural network model type, the neural network model type may be a convolutional neural network (convolutional neural network, CNN), a transformer (transformer) network, a multilayer perceptron-mixer (multilayer perceptron-mixer, MLP-Mixer) network, and the like, and the parameter corresponding to the neural network model type includes but is not limited to a quantity of layers supported, a maximum quantity of neurons at each layer, a quantity of times of inference completed based on the specific neural network per unit time, and the like;
a model size, where the model size is used for indicating a scale of the neural network model, for example, the scale may be indicated by using a quantity of parameters, and a larger quantity of parameters indicates a larger scale of the neural network model;
a quantity of quantization bits of a target algorithm model, for example, a quantity of quantization bits of model parameters;
a quantity of layers of the model;
a maximum quantity of neurons at each layer of the model;
a running time period of each neural network algorithm;
a running time period of a plurality of neural network algorithm combinations;
recommendation information of the first communication device on the target parameter of the target algorithm; and
support information of the first communication device for a pre-agreed target algorithm.

The quantity of operation times may be a quantity of operation times performed on a first target operation, where the first target operation includes at least one of the following:
a multiplication operation;
an addition operation; and
operations corresponding to nonlinear activation functions.

The operations corresponding to the nonlinear activation functions may be classified into one class of operation. The first communication device reports, to the second communication device, a total quantity of operation times on the type of operation. The operations corresponding to the nonlinear activation functions may be classified into a plurality of classes of operations. For example, a corresponding quantity of operation times is reported for each nonlinear activation function. The operations corresponding to the nonlinear activation functions may further be classified into several subclasses. A quantity of operation times corresponding to each subclass is reported.

Optionally, the quantity of operation times supported by the first communication device within the first target time period includes at least one of the following:
a quantity of operation times of each algorithm when executed within the first target time period, for example, a quantity of operation times corresponding to each algorithm of a plurality of nonlinear activation functions;
a quantity of operation times of at least two operations when simultaneously executed within the first target time period, where at least two operation combinations may be indicated by the first communication device, or may be configured by the second communication device, or may be pre-agreed, where the terminal may report a corresponding quantity of operation times corresponding to each algorithm combination or may simultaneously report quantities of operations corresponding to a plurality of operation combinations, and the terminal may further separately report a quantity of operation times of each algorithm in the operation combination, or add quantities of operations of algorithms in the operation combination and report the quantity, or convert a quantity of operation times corresponding to at least two groups of operations in the operation combination into a quantity of operation times corresponding to a preset operation and report the quantity; for example, the operation combination includes an operation A and an operation B, a quantity of operation times that can be completed when the operation A is executed within the first target time period is N1, a quantity of operation times that can be completed when the operation B is executed within the first target time period is N2, and assuming that a quantity of operation times that can be completed when the preset operation is executed within the first target time period is N0, N1 and N2 are converted into a target multiple of N0 according to a conversion ratio, and then reporting is performed based on a converted quantity of times; and certainly, N1 may be converted into a multiple of N2, or N2 may be converted into a multiple of N1; and
a total quantity of operation times within the first target time period, where the total quantity may be obtained by adding quantities of operations corresponding to various operations within the first target time period, or may be a total quantity of operation times obtained by adding quantities of operations corresponding to the operations after conversion according to conversion information between the quantities of operations corresponding to operations and a preset quantity corresponding to the preset operation. A specific conversion manner has been described above, and details are not described herein again. Operations corresponding to the total quantity of operation times may be any operation combination or any operation combination in a predefined operation set.

Optionally, the second processing resource information includes at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

Specifically, the expected time period corresponding to running the target algorithm by the first communication device includes an expected time period corresponding to running the neural network model by the first communication device. Another communication device other than the first communication device may configure, according to each neural network model, an expected time period for execution. The first communication device indicates whether the expected time period is supported. Alternatively, the another communication device configures, to the first communication device, a plurality of expected time periods for executing by the neural network, and the first communication device indicates which expected time period is supported.

In addition, the another communication device further configures an input type of the neural network and preprocessing required for input information.

The expected time period may include a time period required for preprocessing, or may not include a time period required for preprocessing. In this embodiment of this application, whether the expected time period includes the time period required for preprocessing may be pre-agreed or may be indicated through interaction.

Optionally, the target algorithm recommendation information includes at least one of the following:
recommendation information of the first communication device on the target parameter of the target algorithm;
revision information of the first communication device on the target parameter of the target algorithm; and
information about whether the first communication device supports the target algorithm.

Optionally, the first processing resource information further includes at least one of the following:
recommendation information of the first communication device on the target parameter of the target algorithm; and
support information of the first communication device for a pre-agreed target algorithm.

Optionally, the target parameter includes at least one of the following:
an activation function;
a quantity of layers;
a quantity of neurons;
a quantity of neurons at each layer;
a neuron connection relationship; and
a running time period of the target algorithm, for example, a running time period of the neural network model.

In this embodiment of this application, the another communication device may configure, to the first communication device, a plurality of different options (where the option may also described as the target parameter) of a same neural network type, for example, configure a same type of neural network model corresponding to different activation functions, or configure a same type of neural network model corresponding to different requirements for a processing capability, or configure a same type of neural network model corresponding to different quantities of layers, or configure a same type of neural network model corresponding to different quantities of neurons, or configure a same type of neural network model corresponding to different neuron connection relationships. The first communication device indicates, to the second communication device, an activation function, a quantity of layers, a quantity of neurons, a quantity of neurons at each layer, a neuron connection relationship, and the like that are supported by the first communication device and that are in the same type of neural network model. In addition, recommendation information of the first neural network model further includes a suggestion for the running time period of the neural network model and whether the corresponding running time period is supported.

Optionally, the revision information allowed by the target parameter may be determined through agreement or information interaction. For example, the quantity of layers is allowed to be revised to C1 or C2.

In a specific embodiment of this application, the first communication device sends first processing resource information to the second communication device, the second communication device configures information about the neural network model based on the first processing resource information, the first communication device further indicates, to the second communication device, whether the neural network model is supported or corresponding recommendation information is fed back, the second communication device further configures the neural network model, and the first communication device may further perform indication. In this way, a finally used neural network model is determined through several rounds of interaction.

Optionally, the sending, by a first communication device, first processing resource information includes:
sending, by the first communication device, the first processing resource information in a case that a preconfigured trigger condition is met.

Optionally, the sending first interaction information includes:
sending at least one of the second processing resource information and the target algorithm recommendation information in a case that a preconfigured trigger condition is met.

Optionally, the method in this embodiment of this application further includes:
sending, by the first communication device, at least one of second interaction information and third processing resource information in a case that a preconfigured trigger condition is met, where the second interaction information is used for indicating a sharing capability of a plurality of target algorithms for an embedded neural-network processing unit NPU, and the third processing resource information is used for indicating an available computing resource.

Optionally, the trigger condition includes at least one of the following:
a quantity of available resources of the first communication device is less than a preset quantity of resources;
available resources of the first communication device are incapable of supporting running of an indicated target algorithm;
the first communication device is incapable of performing processing in a manner in the first processing resource information or the second interaction information;
the available resources of the first communication device change or a range of changes in the available resources exceeds a threshold; and
the first communication device needs to simultaneously run a plurality of target algorithms.

Optionally, the first processing resource information or the second interaction information further includes at least one of the following:
whether at least two target algorithms can be simultaneously run, for example, the second communication device indicates, to the first communication device, neural network models expected to be simultaneously executed, and the second communication device indicates whether the neural network models that are indicated by at least the second communication device and that are expected to be simultaneously executed can be simultaneously run; the at least two target algorithms may be of a same algorithm type, or may be of different algorithm types;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

Optionally, the performing, by the first communication device, information interaction with at least one target communication device according to the first processing resource information includes:
obtaining first indication information from the at least one target communication device; and
determining, according to the first indication information, a target algorithm used by the first communication device, where
the first indication information includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the first processing resource information further includes at least one of the following:
indication information of a running priority of the target algorithm, where the running priority of the target algorithm may be pre-agreed or may be indicated by the first communication device or may be configured by another communication device, for example, how to perform, if there are a plurality of different neural network models, preferential processing in a case that resources are valid;
a time period from configuration to taking effect of the neural network model;
a time period required for switching between at least two neural network models; and
whether a corresponding operation is runnable during switching between the at least two neural network models.

Optionally, the method in this embodiment of this application further includes:
obtaining update indication information from the at least one target communication device, where the update indication information is used for indicating to update the configuration information; and
updating the configuration information of the target algorithm according to the update indication information.

For example, the configuration information of the neural network model is updated according to the update indication information.

Optionally, the performing, by the first communication device, information interaction with at least one target communication device according to the first processing resource information includes:
obtaining second indication information from the at least one target communication device, where the second indication information is used for indicating a target algorithm used by the first communication device.

As an optional implementation, the second indication information is used for indicating a neural network model used by the first communication device.

After obtaining the second indication information, the first communication device determines, based on the second indication information, the target algorithm used by the first communication device, for example, determines the neural network model used by the first communication device.

In this embodiment of this application, the first communication device may interact a plurality of different processing resource information combinations with the another communication device, where the processing resource information combination may also be described as a capability information combination. For example, a processing resource information is applicable to a high-performance scenario, and another processing resource information combination is applicable to a low power consumption scenario. The first communication device may determine a current processing resource information combination according to a self state. The processing resource information combination may include at least one of the first processing resource information and the first interaction information.

In addition, the first processing resource information, the configuration information of the target algorithm, the first interaction information, the second processing resource information, the second interaction information, the third processing resource information, the first indication information, the second indication information, or the update indication information in this embodiment of this application may be sent by using at least one of a radio resource control RRC message, a medium access control control element (medium access control control element, MAC CE) message, uplink control information (uplink control information, UCI), and a non-access stratum (non-access stratum, NAS) message.

In this embodiment of this application, the first communication device may be a terminal or may be a network node, and the another communication device other than the first communication device may be a core network node, for example, a network data analytics function (network data analytics function, NWDAF) node or a neuron network processing node. The another communication device may alternatively be a base station or a newly defined neuron network processing node. The another communication device may alternatively be a combination of a plurality of network nodes. For example, the configuration information is from a first network node, the first communication device reports the first interaction information to the first network node or a second network node based on the configuration information, a third network node performs a second round of configuration on the first communication device, and the first communication device indicates final model support information to the third network node or a fourth network node.

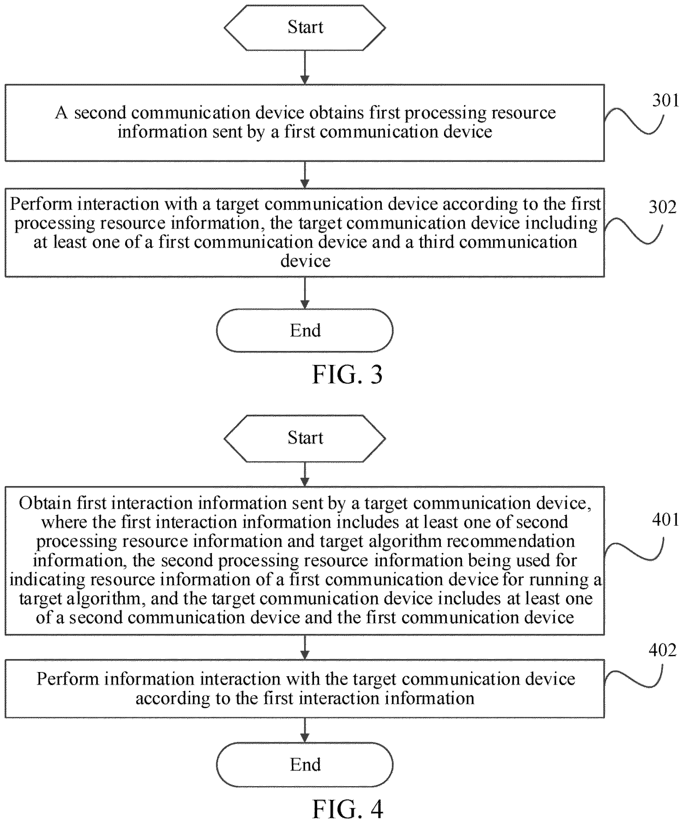

As shown in FIG. 3, an embodiment of this application further provides an information interaction method, including:
Step 301: A second communication device obtains first processing resource information sent by a first communication device.

The first processing resource information is used for indicating at least one of the following:
available resource information of the first communication device for running a target algorithm, where the target algorithm includes at least one of a neural network algorithm, an artificial intelligence algorithm, and a machine learning algorithm, and the target algorithm may specifically include a training algorithm, an inference algorithm, and the like; and
a target algorithm set supported by the first communication device.

Step 302: The second communication device performs interaction with a target communication device according to the first processing resource information, the target communication device including at least one of the first communication device and a third communication device.

In the embodiments of this application, the second communication device obtains the first processing resource information, and can determine, based on the first processing resource information, the available resource information and/or the supported target algorithm set (for example, a supported neural network set), and the like of the first communication device. In this way, interaction is subsequently performed based on the first processing resource information, and a target algorithm used by the first communication device can be determined, for example, a target neural network model used by the first communication device, so that the neural network model used by the first communication device is a neural network model matching a resource capability of the first communication device.

Optionally, the performing, by the second communication device, interaction with a target communication device according to the first processing resource information includes:
sending, by the second communication device, configuration information of the target algorithm, where the configuration information of the neural network algorithm includes configuration information of a neural network model.

Optionally, the performing, by the second communication device, interaction with a target communication device according to the first processing resource information includes:

obtaining, by the second communication device, first interaction information sent by the target communication device, where the first interaction information includes at least one of second processing resource information and target algorithm recommendation information, the second processing resource information being used for indicating resource information of the first communication device for running the target algorithm.

Optionally, the performing, by the second communication device, interaction with a target communication device according to the first processing resource information includes:
sending first indication information, where
the first indication information includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the method in this embodiment of this application further includes:
sending second indication information, where the second indication information is used for indicating a target algorithm used by the first communication device.

Optionally, the method in this embodiment of this application further includes:
sending update indication information, where the update indication information is used for indicating to update the configuration information.

Optionally, the configuration information includes at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library.

Optionally, the first processing resource information includes at least one of the following:
an activation function type supported by the first communication device;
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period including at least one time unit;
a relationship between the quantity of operation times supported within the first target time period and a quantity of operation times supported within a second target time period, the second target time period including at least one time unit, and the time unit included in the second target time period being different from the time unit included in the first target time period;
a time period required for completing a specific operation of a specific target by the first communication device;
information about the hyperoperation supported by the first communication device;
information about a neural network model supported by the first communication device;
a model size;
a quantity of quantization bits of a target algorithm model;
a quantity of layers of the model;
a maximum quantity of neurons at each layer of the model;
a running time period of each neural network algorithm; and
a running time period of a plurality of neural network algorithm combinations.

Optionally, the second processing resource information includes at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

Optionally, the target algorithm recommendation information includes at least one of the following:
recommendation information of the first communication device on the target parameter of the target algorithm;
revision information of the first communication device on the target parameter of the target algorithm; and
information about whether the first communication device supports the target algorithm.

Optionally, the target parameter includes at least one of the following:
an activation function;
a quantity of layers;
a quantity of neurons;
a quantity of neurons at each layer;
a neuron connection relationship; and
a running time period of the target algorithm.

Optionally, the first processing resource information or the second processing resource information further includes at least one of the following:
whether at least two target algorithms are simultaneously runnable;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

In the embodiments of this application, the second communication device obtains the first processing resource information, and can determine, based on the first processing resource information, the available resource information and/or the supported target algorithm set (for example, a supported neural network set), and the like of the first communication device. In this way, interaction is subsequently performed based on the first processing resource information, and a target algorithm used by the first communication device can be determined, for example, a target neural network model used by the first communication device, so that the neural network model used by the first communication device is a neural network model matching a resource capability of the first communication device.

As shown in FIG. 4, an embodiment of this application further provides an information interaction method, including:
Step 401: A third communication device obtains first interaction information sent by a target communication device, where the first interaction information includes at least one of second processing resource information and target algorithm recommendation information, the second processing resource information being used for indicating resource information of a first communication device for running a target algorithm, and the target communication device includes at least one of a second communication device and the first communication device; and
the first interaction information has been described in detail in the foregoing method embodiments. Details are not described herein again.

Step 402: The third communication device obtains information interaction with the target communication device according to the first interaction information.

Optionally, information about interaction between the third communication device and the target communication device includes at least one of the following:
indication information of a running priority of the target algorithm;
a time period from configuration to taking effect of the neural network model;
a time period required for switching between at least two neural network models;
whether a corresponding operation is runnable during switching between the at least two neural network models;
update indication information, where the update indication information is used for indicating to update configuration information of the target algorithm; and
a target algorithm used by the first communication device.

In the method provided in this embodiment of this application, after obtaining the first interaction information, the third communication device feeds back, to the first communication device, the target algorithm used by the first communication device, the indication information of the running priority of the target algorithm, the time period from configuration to taking effect of the neural network model, the time period required for switching between at least two neural network models, and the like, so that the first communication device can use a target algorithm matching a running resource of the first communication device.

In a specific embodiment of this application, the first communication device sends the first processing resource information to the second communication device, the second communication device sends the configuration information of the target algorithm to the first communication device, the first communication device sends the first interaction information to the second communication device, and the second communication device indicates, to the first communication device, the target neural network model used by the first communication device. Alternatively, in another embodiment of this application, the first communication device sends the first processing resource information to the second communication device, the second communication device sends the configuration information of the target algorithm to the first communication device, the first communication device sends the first interaction information to the third communication device, and the third communication device indicates the target neural network model used by the first communication device.

An execution entity of the information interaction method in the embodiments of this application may be an information interaction apparatus. In the embodiments of this application, the information interaction apparatus provided in the embodiments of this application is described by using an example in which the information interaction apparatus performs the information interaction method.

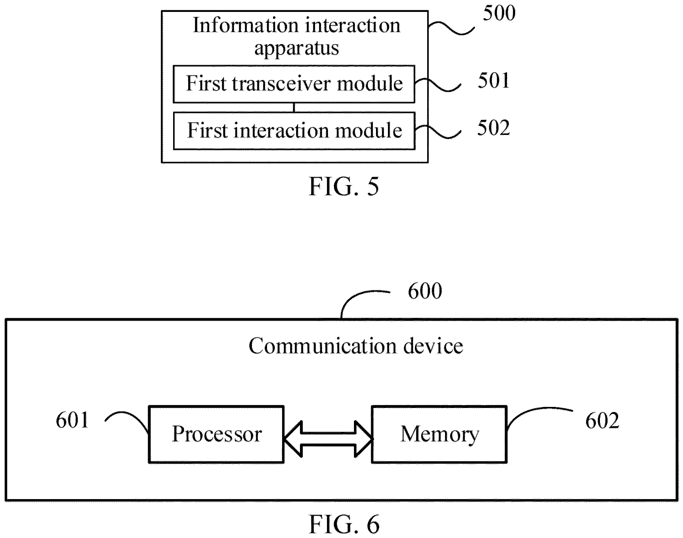

As shown in FIG. 5, an embodiment of this application further provides an information interaction apparatus 500, including:
a first transceiver module 501, configured to send first processing resource information; and
a first interaction module 502, configured to perform information interaction with at least one target communication device according to the first processing resource information, where
the first processing resource information is used for indicating at least one of the following:
available resource information of the first communication device for running a target algorithm, where the target algorithm includes at least one of a neural network algorithm, an artificial intelligence algorithm, and a machine learning algorithm; and
a target algorithm set supported by the first communication device.

Optionally, the first interaction module is configured to receive configuration information of the target algorithm from the at least one target communication device, where the configuration information of the neural network algorithm includes configuration information of a neural network model.

Optionally, the target algorithm set includes at least one of the following:
a set of neural network models;
a set of algorithms for performing inference based on a specific neural network; and
a set of algorithms for training based on the specific neural network.

Optionally, the configuration information includes at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library.

Optionally, the first interaction module is configured to send first interaction information to the at least one target communication device according to the configuration information of the target algorithm, where the first interaction information includes at least one of second processing resource information and target algorithm recommendation information, the second processing resource information being used for indicating resource information of the first communication device for running the target algorithm.

Optionally, the first processing resource information includes at least one of the following:
an activation function type supported by the first communication device;
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period including at least one time unit, where
a relationship between the quantity of operation times supported within the first target time period and a quantity of operation times supported within a second target time period, the second target time period including at least one time unit, and the time unit included in the second target time period being different from the time unit included in the first target time period;
a time period required for completing a specific operation of a specific target by the first communication device;
information about the hyperoperation supported by the first communication device;
information about a neural network model supported by the first communication device;
a model size;
a quantity of quantization bits of a target algorithm model;
a quantity of layers of the model;
a maximum quantity of neurons at each layer of the model;
a running time period of each neural network algorithm; and
a running time period of a plurality of neural network algorithm combinations.

Optionally, the quantity of operation times supported by the first communication device within the first target time period includes at least one of the following:
a quantity of operation times of each algorithm when executed within the first target time period;
a quantity of operation times of at least two operations when simultaneously executed within the first target time period; and
a total quantity of operation times within the first target time period.

Optionally, a unit of the time unit is a unit of time, a subcarrier space, a timeslot, or a frame.

Optionally, the second processing resource information includes at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

Optionally, the target algorithm recommendation information includes at least one of the following:
recommendation information of the first communication device on the target parameter of the target algorithm;
revision information of the first communication device on the target parameter of the target algorithm; and
information about whether the first communication device supports the target algorithm.

Optionally, the first processing resource information further includes at least one of the following:
recommendation information of the first communication device on the target parameter of the target algorithm; and
support information of the first communication device for a pre-agreed target algorithm.

Optionally, the target parameter includes at least one of the following:
an activation function;
a quantity of layers;
a quantity of neurons;
a quantity of neurons at each layer;
a neuron connection relationship; and
a running time period of the target algorithm.

Optionally, the first transceiver module is configured to send, by the first communication device, the first processing resource information in a case that a preconfigured trigger condition is met.

Optionally, the apparatus provided in this embodiment of this application further includes:
a second transceiver module, configured to send, by the first communication device, at least one of second interaction information and third processing resource information in a case that a preconfigured trigger condition is met, where the second interaction information is used for indicating a sharing capability of a plurality of target algorithms for an NPU, and the third processing resource information is used for indicating an available computing resource.

Optionally, the trigger condition includes at least one of the following:
a quantity of available resources of the first communication device is less than a preset quantity of resources;
available resources of the first communication device are incapable of supporting running of an indicated target algorithm;
the first communication device is incapable of performing processing in a manner in the first processing resource information or the second interaction information;
the available resources of the first communication device change or a range of changes in the available resources exceeds a threshold; and
the first communication device needs to simultaneously run a plurality of target algorithms.

Optionally, the first processing resource information or the second interaction information further includes at least one of the following:
whether at least two target algorithms are simultaneously runnable;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

Optionally, the first interaction module includes:
a first obtaining submodule, configured to obtain first indication information from at least one target communication device; and
a first determining submodule, configured to determine, according to the first indication information, a target algorithm used by the first communication device, where
the first indication information includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the first processing resource information further includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the apparatus provided in this embodiment of this application further includes:
a third obtaining module, configured to obtain update indication information from the at least one target communication device, where the update indication information is used for indicating to update the configuration information; and
an update module, configured to update the configuration information of the target algorithm according to the update indication information.

Optionally, the first interaction module is configured to obtain second indication information from the at least one target communication device, where the second indication information is used for indicating a target algorithm used by the first communication device.

Through the apparatus in this embodiment of this application, after the first processing resource information is sent, another communication device can determine, based on the first processing resource information, the available resource information and/or the supported target algorithm set (for example, a supported neural network set), and the like of the first communication device. In this way, interaction is subsequently performed based on the first processing resource information, and a target algorithm used by the first communication device can be determined, for example, a target neural network model used by the first communication device, so that the neural network model used by the first communication device is a neural network model matching a resource capability of the first communication device.

The information interaction apparatus in this embodiment of this application may be an electronic device, for example, an electronic device with an operating system, or may be a component in an electronic device, for example, an integrated circuit or a chip. The electronic device may be a terminal, or may be another device other than a terminal. For example, the terminal may include but is not limited to a type of the terminal 11 listed above, and the another device may be a server, a network attached storage (network attached storage, NAS), or the like. This is not specifically limited in the embodiments of this application.

The information interaction apparatus provided in the embodiments of this application can implement the processes implemented in the method embodiment of FIG. 2 and achieve the same technical effect. To avoid repetition, details are not described herein again.

Optionally, as shown in FIG. 6, an embodiment of this application further provides a communication device 600, including a processor 601 and a memory 602. The memory 602 stores a program or instructions runnable on the processor 601. For example, when the communication device 600 is a terminal, the program or instructions are executed by the processor 601 to implement the steps of the embodiments of the information interaction method on a side of the first communication device, and the same technical effects can be achieved. When the communication device 600 is a network side device, the program or instructions are executed by the processor 601 to implement the steps of the method embodiments on a side of the second communication device or the third communication device, and the same technical effects can be achieved. To avoid repetition, details are not described herein again.

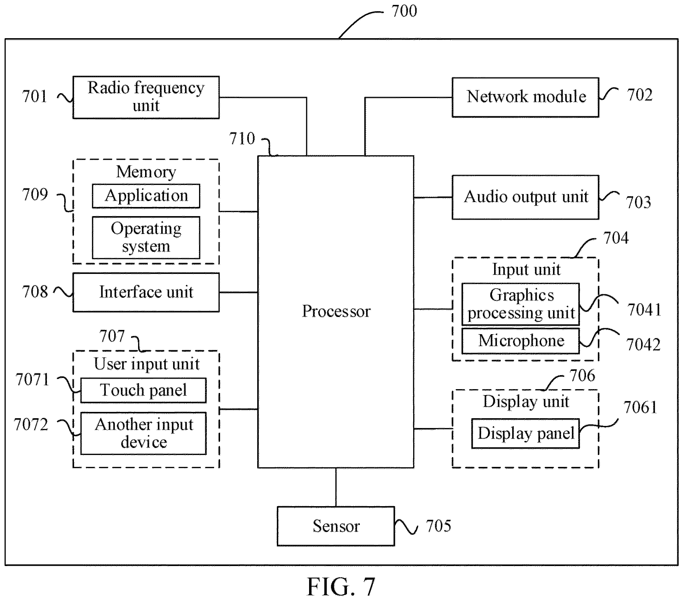

An embodiment of this application further provides a first communication device. The communication device is a terminal, including a processor and a communication interface. The communication interface is configured to send first processing resource information. The processor is configured to perform information interaction with at least one communication device according to the first processing resource information. The embodiment corresponds to the method embodiments on the side of the first communication device. All implementation processes and implementations of the method embodiment are applicable to this embodiment and can achieve the same technical effects. Specifically, FIG. 7 is a schematic diagram of a hardware structure of a terminal according to an embodiment of this application.

The terminal 700 includes, but is not limited to, at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that, the terminal 700 may further include a power supply (such as a battery) for supplying power to the components. Preferably, the power supply may be logically connected to the processor 710 by using a power management system, thereby implementing functions such as charging, discharging, and power consumption management by using the power management system. A terminal structure shown in FIG. 7 does not constitute a limitation to the terminal, and the terminal may include more or fewer components than those shown in the figure, or some components may be combined, or a different component deployment may be used. Details are not described herein again.

It may be understood that, in the embodiments of this application, the input unit 704 may include a graphics processing unit (graphics processing unit, GPU) 7041 and a microphone 7042. The graphics processing unit 7041 processes image data of a static picture or a video obtained by an image capturing apparatus (for example, a camera) in a video capturing mode or an image capturing mode. The display unit 706 may include a display panel 7061. A display panel 7061 may be configured in a form such as a liquid crystal display or an organic light-emitting diode. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick, and the details will not be described herein again.

In this embodiment of this application, after receiving downlink data from a network side device, the radio frequency unit 701 may transmit the data to the processor 710 for processing. In addition, the radio frequency unit 701 may send uplink data to the network side device. Generally, the radio frequency unit 701 includes, but is not limited to, an antenna, an amplifier, a transceiver, a coupler, a low noise amplifier, a duplexer, and the like.

The memory 709 may be configured to store a software program or instructions and various data. The memory 709 may mainly include a first storage area that stores a program storage or instructions and a second storage area that stores data. The first storage area may store an operating system, an application program or instructions required by at least one function (for example, a sound playback function and an image playback function), or the like. In addition, the memory 709 may include a volatile memory or a non-volatile memory, or the memory 709 may include both a volatile memory and a non-volatile memory. The non-volatile memory may be a read-only memory (read-only memory, ROM), a programmable ROM (programmable ROM, PROM), an erasable programmable read-only memory (erasable PROM, EPROM), an electrically EPROM (electrically EPROM, EEPROM), or a flash memory. The volatile memory may be a random access memory (random access memory, RAM), a static RAM (static RAM, SRAM), a dynamic RAM (dynamic RAM, DRAM), a synchronous DRAM (synchronous DRAM, SDRAM), a double data rate SDRAM (double data rate SDRAM, DDRSDRAM), an enhanced SDRAM (enhanced SDRAM, ESDRAM), a synch link DRAM (synch link DRAM, SLDRAM), and a direct rambus RAM (direct rambus RAM, DRRAM). The memory 709 in this embodiment of this application includes but is not limited to these memories and any other suitable types of memories.

The processor 710 may include one or more processing units. Optionally, the processor 710 integrates an application processor and a modem processor. The application processor mainly processes operations involving an operating system, a user interface, an application program, or the like. The modem processor mainly processes a wireless communication signal, for example, a baseband processor. It may be understood that the foregoing modem processor may not be integrated into the processor 710.

The radio frequency unit 701 is configured to: send first processing resource information; and perform information interaction with at least one communication device according to the first processing resource information.

Optionally, the radio frequency unit 701 is configured to obtain configuration information of the target algorithm, where the configuration information of the neural network algorithm includes configuration information of a neural network model.

Optionally, the configuration information includes at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library.

Optionally, the radio frequency unit 701 is configured to send first interaction information according to the configuration information of the target algorithm, where the first interaction information includes at least one of second processing resource information and target algorithm recommendation information, the second processing resource information being used for indicating resource information of the first communication device for running the target algorithm.

Optionally, the first processing resource information includes at least one of the following:
an activation function type supported by the first communication device;
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period including at least one time unit, where
a relationship between the quantity of operation times supported within the first target time period and a quantity of operation times supported within a second target time period, the second target time period including at least one time unit, and the time unit included in the second target time period being different from the time unit included in the first target time period;
a time period required for completing a specific operation of a specific target by the first communication device;
information about the hyperoperation supported by the first communication device;
information about a neural network model supported by the first communication device;
a model size;
a quantity of quantization bits of a target algorithm model;
a quantity of layers of the model;
a maximum quantity of neurons at each layer of the model;
a running time period of each neural network algorithm; and
a running time period of a plurality of neural network algorithm combinations.

Optionally, the quantity of operation times supported by the first communication device within the first target time period includes at least one of the following:
a quantity of operation times of each algorithm when executed within the first target time period;
a quantity of operation times of at least two operations when simultaneously executed within the first target time period; and
a total quantity of operation times within the first target time period.

Optionally, a unit of the time unit is a unit of time, a subcarrier space, a timeslot, or a frame.

Optionally, the second processing resource information includes at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

Optionally, the target algorithm recommendation information includes at least one of the following:
recommendation information of the first communication device on the target parameter of the target algorithm;
revision information of the first communication device on the target parameter of the target algorithm; and
information about whether the first communication device supports the target algorithm.
Optionally, the first processing resource information further includes at least one of the following:
recommendation information of the first communication device on the target parameter of the target algorithm; and
support information of the first communication device for a pre-agreed target algorithm.

Optionally, the target parameter includes at least one of the following:
an activation function;
a quantity of layers;
a quantity of neurons;
a quantity of neurons at each layer;
a neuron connection relationship; and
a running time period of the target algorithm.

Optionally, the radio frequency unit 701 is configured to send, by the first communication device, at least one of the first processing resource information, the second processing resource information, and the target algorithm recommendation information in a case that a preconfigured trigger condition is met.

Optionally, the radio frequency unit 701 is configured to send at least one of second interaction information and third processing resource information in a case that the preconfigured trigger condition is met, where the second interaction information is used for indicating a sharing capability of a plurality of target algorithms for an NPU, and the third processing resource information is used for indicating an available computing resource.

Optionally, the trigger condition includes at least one of the following:
a quantity of available resources of the first communication device is less than a preset quantity of resources;
available resources of the first communication device are incapable of supporting running of an indicated target algorithm;
the first communication device is incapable of performing processing in a manner in the first processing resource information or the second interaction information;
the available resources of the first communication device change or a range of changes in the available resources exceeds a threshold; and
the first communication device needs to simultaneously run a plurality of target algorithms.

Optionally, the first processing resource information or the second interaction information further includes at least one of the following:
whether at least two target algorithms are simultaneously runnable;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

Optionally, the radio frequency unit 701 is configured to: obtain first indication information from the at least one target communication device; determine, according to the first indication information, a target algorithm used by the first communication device, where
the first indication information includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the first processing resource information further includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the radio frequency unit 701 is configured to obtain update indication information from the at least one target communication device, where the update indication information is used for indicating to update the configuration information; and the processor 710 is configured to update the configuration information of the target algorithm according to the update indication information.

Optionally, the radio frequency unit 701 is configured to: obtain second indication information from the at least one target communication device, where the second indication information is used for indicating a target algorithm used by the first communication device.

In the embodiments of this application, after the terminal sends the first processing resource information, another communication device can determine, based on the first processing resource information, the available resource information and/or the supported target algorithm set (for example, a supported neural network set), and the like of the terminal. In this way, interaction is subsequently performed based on the first processing resource information, and a target algorithm used by the terminal can be determined, for example, a target neural network model used by the terminal, so that the neural network model used by the terminal is a neural network model matching a resource capability of the terminal.

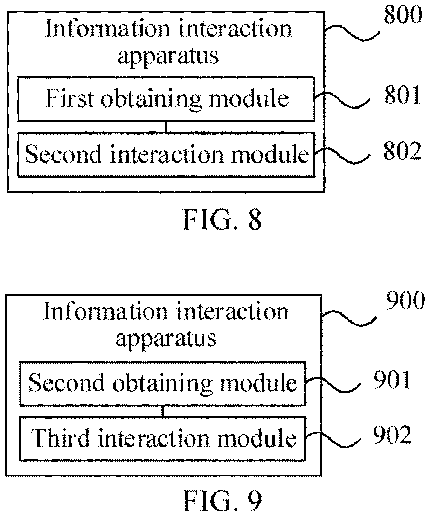

As shown in FIG. 8, an embodiment of this application further provides an information interaction apparatus 800, including:
a first obtaining module 801, configured to obtain first processing resource information sent by a first communication device; and
a second interaction module 802, configured to perform interaction with a target communication device according to the first processing resource information, the target communication device including at least one of the first communication device and a third communication device, where
the first processing resource information is used for indicating at least one of the following:
available resource information of the first communication device for running a target algorithm, where the target algorithm includes at least one of a neural network algorithm, an artificial intelligence algorithm, and a machine learning algorithm; and
a target algorithm set supported by the first communication device.

Optionally, the second interaction module is configured to send configuration information of the target algorithm, where the configuration information of the neural network algorithm includes configuration information of a neural network model.

Optionally, the second interaction module is configured to obtain first interaction information sent by the target communication device, where the first interaction information includes at least one of second processing resource information and target algorithm recommendation information, the second processing resource information being used for indicating resource information of the first communication device for running the target algorithm.

Optionally, the second interaction module is configured to send first indication information, where
the first indication information includes at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

Optionally, the apparatus provided in this embodiment of this application further includes:
a third transceiver module, configured to send second indication information, where the second indication information is used for indicating a target algorithm used by the first communication device.

Optionally, the apparatus provided in this embodiment of this application further includes:
a fourth transceiver module, configured to send update indication information, where the update indication information is used for indicating to update the configuration information.

Optionally, the configuration information includes at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library.

Optionally, the first processing resource information includes at least one of the following:
an activation function type supported by the first communication device;
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period including at least one time unit;
a relationship between the quantity of operation times supported within the first target time period and a quantity of operation times supported within a second target time period, the second target time period including at least one time unit, and the time unit included in the second target time period being different from the time unit included in the first target time period;
a time period required for completing a specific operation of a specific target by the first communication device;
information about the hyperoperation supported by the first communication device;
information about a neural network model supported by the first communication device;
a model size;
a quantity of quantization bits of a target algorithm model;
a quantity of layers of the model;
a maximum quantity of neurons at each layer of the model;
a running time period of each neural network algorithm; and
a running time period of a plurality of neural network algorithm combinations.

Optionally, the second processing resource information includes at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

Optionally, the target algorithm recommendation information includes at least one of the following:
recommendation information of the first communication device on the target parameter of the target algorithm;
revision information of the first communication device on the target parameter of the target algorithm; and
information about whether the first communication device supports the target algorithm.

Optionally, the target parameter includes at least one of the following:
an activation function;
a quantity of layers;
a quantity of neurons;
a quantity of neurons at each layer;
a neuron connection relationship; and
a running time period of the target algorithm.

Optionally, the first processing resource information or the second processing resource information further includes at least one of the following:
whether at least two target algorithms are simultaneously runnable;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

Through the apparatus in this embodiment of this application, the first processing resource information is obtained, and the available resource information and/or the supported target algorithm set (for example, a supported neural network set), and the like of the first communication device can be determined based on the first processing resource information. In this way, interaction is subsequently performed based on the first processing resource information, and a target algorithm used by the first communication device can be determined, for example, a target neural network model used by the first communication device, so that the neural network model used by the first communication device is a neural network model matching a resource capability of the first communication device.

As shown in FIG. 9, an embodiment of this application further provides an information interaction apparatus 900, including:
a second obtaining module 901, configured to obtain first interaction information sent by a target communication device, where the first interaction information includes at least one of second processing resource information and target algorithm recommendation information, the second processing resource information being used for indicating resource information of a first communication device for running a target algorithm, and the target communication device includes at least one of a second communication device and the first communication device; and
a third interaction module 902, configured to perform information interaction with the target communication device according to the first interaction information.

Optionally, interaction information includes at least one of the following:
indication information of a running priority of the target algorithm;
a time period from configuration to taking effect of the neural network model;
a time period required for switching between at least two neural network models;
whether a corresponding operation is runnable during switching between the at least two neural network models;
update indication information, where the update indication information is used for indicating to update configuration information of the target algorithm; and
a target algorithm used by the first communication device.

Through the information interaction apparatus provided in this embodiment of this application, after the first interaction information is obtained, the third communication device feeds back, to the first communication device or another communication device, the target algorithm used by the first communication device, the indication information of the running priority of the target algorithm, the time period from configuration to taking effect of the neural network model, the time period required for switching between at least two neural network models, and the like, so that the first communication device can use a target algorithm matching a running resource of the first communication device.

An embodiment of this application further provides a second communication device. The second communication device is specifically a network side device, including a processor and a communication interface. The communication interface is configured to obtain first processing resource information, and perform interaction with a target communication device according to the first processing resource information, the target communication device including at least one of the first communication device and a third communication device. The embodiment of the network side device corresponds to the method embodiment of the second communication device. All implementation processes of the method embodiment of the second communication device are applicable to the embodiment of the network side device and can achieve the same technical effects.

An embodiment of this application further provides a third communication device. The second communication device is specifically a network side device, including a processor and a communication interface. The communication interface is configured to: obtain first interaction information sent by a target communication device, where the first interaction information includes at least one of second processing resource information and target algorithm recommendation information, the second processing resource information being used for indicating resource information of a first communication device for running a target algorithm, and the target communication device includes at least one of a second communication device and the first communication device; and perform information interaction with the target communication device according to the first interaction information. The embodiment of the network side device corresponds to the method embodiment of the third communication device. All implementation processes of the method embodiment of the third communication device are applicable to the embodiment of the network side device and can achieve the same technical effects.

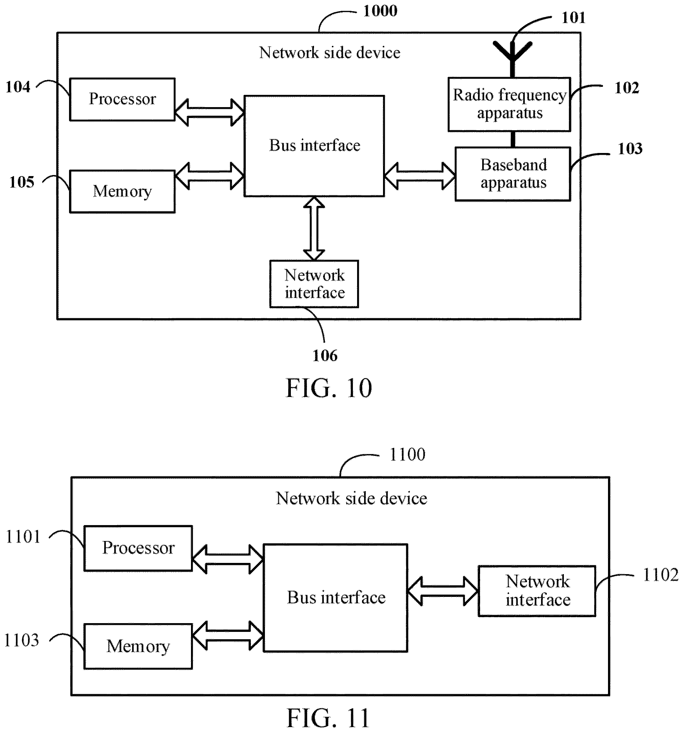

Specifically, an embodiment of this application further provides a network side device. The network side device is specifically a second communication device or a third communication device. As shown in FIG. 10, the network side device 1000 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-processed information, and sends the information to the radio frequency apparatus 102. The radio frequency apparatus 102 processes received information and sends the information by using the antenna 101.

In the foregoing embodiments, the method performed by the second communication device or the third communication device may be implemented in the baseband apparatus 103. The baseband apparatus 103 includes a baseband processor.

The baseband apparatus 103 may include, for example, at least one baseband plate. A plurality of chips are arranged on the baseband plate. As shown in FIG. 10, one of the plurality of chips is, for example, the baseband processor, and is connected to the memory 105 through a bus interface, to invoke a program in the memory 105 to perform operations performed by the second communication device or the third communication device in the foregoing method embodiment.

The network side device may further include a network interface 106. The interface is, for example, a common public radio interface (common public radio interface, CPRI).

Specifically, the network side device 1000 in this embodiment of the present invention further includes: instructions or a program stored in the memory 105 and executable on the processor 104, and the processor 104 invokes the instructions or program in the memory 105 to perform the method performed by the modules shown in FIG. 8 or FIG. 9, and can achieve the same technical effect. To avoid repetition, details are not described herein again.

Specifically, an embodiment of this application further provides a network side device. The network side device is specifically a second communication device or a third communication device. As shown in FIG. 11, the network side device 1100 includes a processor 1101, a network interface 1102, and a memory 1103. The network interface 1102 is, for example, a common public radio interface CPRI.

Specifically, the network side device 1100 in this embodiment of the present invention further includes: instructions or a program stored in the memory 1103 and executable on the processor 1101, and the processor 1101 invokes the instructions or program in the memory 1103 to perform the method performed by the modules shown in FIG. 8 or FIG. 9, and can achieve the same technical effect. To avoid repetition, details are not described herein again.

An embodiment of this application further provides a readable storage medium, storing a program or instructions, the program or instructions, when executed by a processor, implementing the processes of the embodiments of the information interaction method, and achieving the same technical effect. To avoid repetition, details are not described herein again.

The processor is a processor in the terminal in the foregoing embodiments. The readable storage medium includes a computer-readable storage medium, for example, a read-only memory ROM, a random access memory RAM, a magnetic disk, an optical disk, or the like.

An embodiment of this application further provides a chip, including a processor and a communication interface coupled to each other, the processor being configured to run a program or instructions to implement the processes of the embodiments of the information interaction method, and can achieve the same technical effects. To avoid repetition, details are not described herein again.

It should be understood that, the chip mentioned in this embodiment of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement the processes of the embodiments of the information interaction method, and can achieve the same technical effects. To avoid repetition, details are not described herein again.

An embodiment of this application further provides an information interaction system, including: a terminal and a network side device. The terminal may be configured to perform the steps of the information interaction method performed by the first communication device above, and the network side device may be configured to perform the steps of the information interaction method performed by the second communication device above.

It is to be noted that, the term such as "include", "comprise", or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Unless otherwise specified, elements defined by the sentence "including one" does not exclude that there are still other same elements in the processes, methods, objects, or apparatuses. In addition, it is to be noted that, the scope of the method and the apparatus in the embodiments of this application is not limited to executing functions in an order shown or discussed, and may also include executing the functions in a substantially simultaneous manner or in a reverse order according to involved functions. For example, the described method may be performed in an order different from that described order, and various steps may also be added, omitted, or combined. In addition, features described with reference to some examples may also be combined in other examples.

According to the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions of this application essentially or the part contributing to the related art may be implemented in the form of a computer software product. The computer software product is stored in a storage medium (such as a read-only memory (ROM)/random access memory (RAM), a magnetic disk, or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are merely illustrative rather than limitative. A person of ordinary skill in the art may derive various forms from this application without departing from the spirit of this application and the scope claimed by the claims, which are all under the protection of this application.

## Claims

1. An information interaction method, comprising:
sending, by a first communication device, first processing resource information; and
performing, by the first communication device, information interaction with at least one target communication device according to the first processing resource information, wherein
the first processing resource information is used for indicating at least one of the following:
available resource information of the first communication device for running a target algorithm, the target algorithm comprising at least one of a neural network algorithm, an artificial intelligence algorithm, and a machine learning algorithm; and
a target algorithm set supported by the first communication device.

2. The method according to claim 1, wherein the performing, by the first communication device, information interaction with at least one target communication device according to the first processing resource information comprises:
receiving, by the first communication device, configuration information of the target algorithm from the at least one target communication device, wherein the configuration information of the neural network algorithm comprises configuration information of a neural network model.

3. The method according to claim 2, wherein the configuration information comprises at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library.

4. The method according to claim 2, further comprising:
obtaining update indication information from the at least one target communication device, wherein the update indication information is used for indicating to update the configuration information; and
updating the configuration information of the target algorithm according to the update indication information.

5. The method according to claim 1 or 2, wherein the performing, by the first communication device, information interaction with at least one target communication device according to the first processing resource information further comprises:
sending, by the first communication device, first interaction information to the at least one target communication device according to the configuration information of the target algorithm, wherein the first interaction information comprises at least one of second processing resource information and target algorithm recommendation information, the second processing resource information being used for indicating resource information of the first communication device for running the target algorithm.

6. The method according to claim 5, wherein the sending first interaction information comprises:
sending at least one of the second processing resource information and the target algorithm recommendation information in a case that a preconfigured trigger condition is met.

7. The method according to claim 5 or 6, wherein the second processing resource information comprises at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

8. The method according to claim 5 or 6, wherein the target algorithm recommendation information comprises at least one of the following:
recommendation information of the first communication device on the target parameter of the target algorithm;
revision information of the first communication device on the target parameter of the target algorithm; and
information about whether the first communication device supports the target algorithm.

9. The method according to claim 1, wherein the first processing resource information comprises at least one of the following:
an activation function type supported by the first communication device;
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period comprising at least one time unit;
a relationship between the quantity of operation times supported within the first target time period and a quantity of operation times supported within a second target time period, the second target time period comprising at least one time unit, and the time unit comprised in the second target time period being different from the time unit comprised in the first target time period;
a time period required for completing a specific operation of a specific target by the first communication device;
information about the hyperoperation supported by the first communication device;
information about a neural network model supported by the first communication device;
a model size;
a quantity of quantization bits of a target algorithm model;
a quantity of layers of the model;
a maximum quantity of neurons at each layer of the model;
a running time period of each neural network algorithm;
a running time period of a plurality of neural network algorithm combinations;
recommendation information of the first communication device on the target parameter of the target algorithm; and
support information of the first communication device for a pre-agreed target algorithm;
indication information of a running priority of the target algorithm;
a time period from configuration to taking effect of the neural network model;
a time period required for switching between at least two neural network models; and
whether a corresponding operation is runnable during switching between the at least two neural network models.

10. The method according to claim 9, wherein the quantity of operation times supported by the first communication device within the first target time period comprises at least one of the following:
a quantity of operation times of each algorithm when executed within the first target time period;
a quantity of operation times of at least two operations when simultaneously executed within the first target time period; and
a total quantity of operation times within the first target time period.

11. The method according to claim 1, wherein the sending, by a first communication device, first processing resource information comprises:
sending, by the first communication device, the first processing resource information in a case that a preconfigured trigger condition is met.

12. The method according to claim 3, 7, 8, or 9, wherein the target parameter comprises at least one of the following:
an activation function;
a quantity of layers;
a quantity of neurons;
a quantity of neurons at each layer;
a neuron connection relationship; and
a running time period of the target algorithm.

13. The method according to claim 1, 2, or 5, further comprising:
sending, by the first communication device, at least one of second interaction information and third processing resource information in a case that a preconfigured trigger condition is met, wherein the second interaction information is used for indicating a sharing capability of a plurality of target algorithms for an NPU, and the third processing resource information is used for indicating an available computing resource.

14. The method according to claim 6, 11, or 13, wherein the trigger condition comprises at least one of the following:
a quantity of available resources of the first communication device is less than a preset quantity of resources;
available resources of the first communication device are incapable of supporting running of an indicated target algorithm;
the first communication device cannot perform processing in a manner in the first processing resource information or the second interaction information;
the available resources of the first communication device change or a range of changes in the available resources exceeds a threshold; and
the first communication device needs to simultaneously run a plurality of target algorithms.

15. The method according to claim 13, wherein the first processing resource information or the second interaction information further comprises at least one of the following:
whether at least two target algorithms are simultaneously runnable;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

16. The method according to claim 1, wherein the performing, by the first communication device, information interaction with at least one target communication device according to the first processing resource information comprises:
obtaining first indication information from the at least one target communication device; and
determining, according to the first indication information, a target algorithm used by the first communication device, wherein
the first indication information comprises at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

17. The method according to claim 1 or 2, wherein the performing, by the first communication device, information interaction with at least one target communication device according to the first processing resource information comprises:
obtaining second indication information from the at least one target communication device, wherein the second indication information is used for indicating a target algorithm used by the first communication device.

18. The method according to claim 1, wherein the target algorithm set comprises at least one of the following:
a set of neural network models;
a set of algorithms for performing inference based on a specific neural network; and
a set of algorithms for training based on the specific neural network.

19. An information interaction method, comprising:
obtaining, by a second communication device, first processing resource information sent by a first communication device; and
performing, by the second communication device, interaction with a target communication device according to the first processing resource information, the target communication device comprising at least one of the first communication device and a third communication device, wherein
the first processing resource information is used for indicating at least one of the following:
available resource information of the first communication device for running a target algorithm, the target algorithm comprising at least one of a neural network algorithm, an artificial intelligence algorithm, and a machine learning algorithm; and
a target algorithm set supported by the first communication device.

20. The method according to claim 19, wherein the performing, by the second communication device, interaction with a target communication device according to the first processing resource information comprises:
sending, by the second communication device, configuration information of the target algorithm, wherein the configuration information of the neural network algorithm comprises configuration information of a neural network model.

21. The method according to claim 20, wherein the performing, by the second communication device, interaction with a target communication device according to the first processing resource information comprises:
obtaining, by the second communication device, first interaction information sent by the target communication device, wherein the first interaction information comprises at least one of second processing resource information and target algorithm recommendation information, the second processing resource information being used for indicating resource information of the first communication device for running the target algorithm.

22. The method according to claim 19 or 21, wherein the performing, by the second communication device, interaction with a target communication device according to the first processing resource information comprises:
sending first indication information, wherein
the first indication information comprises at least one of the following:
indication information of a running priority of the target algorithm;
a time period from configuration to taking effect of the neural network model;
a time period required for switching between at least two neural network models; and
whether a corresponding operation is runnable during switching between the at least two neural network models.

23. The method according to claim 19 or 21, further comprising:
sending second indication information, wherein the second indication information is used for indicating a target algorithm used by the first communication device.

24. The method according to claim 20, further comprising:
sending update indication information, wherein the update indication information is used for indicating to update the configuration information.

25. The method according to claim 20, wherein the configuration information comprises at least one of the following:
at least one expected time period for running the target algorithm;
an input type of the target algorithm;
preprocessing information corresponding to input information of the target algorithm;
different target parameters corresponding to neural network models of a same target algorithm type; and
a neural network model library.

26. The method according to claim 19, wherein the first processing resource information comprises at least one of the following:
an activation function type supported by the first communication device;
an operation type supported by the first communication device;
a conversion relationship between available resources used between different operations supported by the first communication device;
whether the first communication device supports different specific operations or hyperoperations within a same time unit;
a combination relationship between the different specific operations supported by the first communication device;
a quantity of operation times supported by the first communication device within a first target time period, the first target time period comprising at least one time unit;
a relationship between the quantity of operation times supported within the first target time period and a quantity of operation times supported within a second target time period, the second target time period comprising at least one time unit, and the time unit comprised in the second target time period being different from the time unit comprised in the first target time period;
a time period required for completing a specific operation of a specific target by the first communication device;
information about the hyperoperation supported by the first communication device;
information about a neural network model supported by the first communication device;
a model size;
a quantity of quantization bits of a target algorithm model;
a quantity of layers of the model;
a maximum quantity of neurons at each layer of the model;
a running time period of each neural network algorithm; and
a running time period of a plurality of neural network algorithm combinations.

27. The method according to claim 21, wherein the second processing resource information comprises at least one of the following:
a target algorithm supported or not supported by the first communication device;
whether the first communication device supports the target algorithm according to a predefined time period;
a time period required for running the target algorithm by the first communication device;
an expected time period corresponding to running the target algorithm by the first communication device; and
a target parameter of the target algorithm supported by the first communication device.

28. The method according to claim 21, wherein the target algorithm recommendation information comprises at least one of the following:
recommendation information of the first communication device on the target parameter of the target algorithm;
revision information of the first communication device on the target parameter of the target algorithm; and
information about whether the first communication device supports the target algorithm.

29. The method according to claim 25, 27, or 28, wherein the target parameter comprises at least one of the following:
an activation function;
a quantity of layers;
a quantity of neurons;
a quantity of neurons at each layer;
a neuron connection relationship; and
a running time period of the target algorithm.

30. The method according to claim 21, wherein the first processing resource information or the second processing resource information further comprises at least one of the following:
whether at least two target algorithms are simultaneously runnable;
a combination of target algorithms that are simultaneously runnable;
a combination of target algorithms that are incapable of being simultaneously run;
a running time period of each target algorithm in the combination of target algorithms that are simultaneously run;
a running period corresponding to running the at least two target algorithms in parallel by the first communication device; and
a priority of the target algorithms.

31. An information interaction method, comprising
obtaining, by a third communication device, first interaction information sent by a target communication device, wherein the first interaction information comprises at least one of second processing resource information and target algorithm recommendation information, the second processing resource information being used for indicating resource information of a first communication device for running a target algorithm, and the target communication device comprises at least one of a second communication device and the first communication device; and
performing, by the third communication device, information interaction with the target communication device according to the first interaction information.

32. The method according to claim 31, wherein information about interaction between the third communication device and the target communication device comprises at least one of the following:
indication information of a running priority of the target algorithm;
a time period from configuration to taking effect of the neural network model;
a time period required for switching between at least two neural network models;
whether a corresponding operation is runnable during switching between the at least two neural network models;
update indication information, wherein the update indication information is used for indicating to update configuration information of the target algorithm; and
a target algorithm used by the first communication device.

33. An information interaction apparatus, comprising:
a first transceiver module, configured to send first processing resource information; and
a first interaction module, configured to perform information interaction with at least one target communication device according to the first processing resource information, wherein
the first processing resource information is used for indicating at least one of the following:
available resource information of a first communication device for running a target algorithm, the target algorithm comprising at least one of a neural network algorithm, an artificial intelligence algorithm, and a machine learning algorithm; and
a target algorithm set supported by the first communication device.

34. An information interaction apparatus, comprising:
a first obtaining module, configured to obtain first processing resource information sent by a first communication device; and
a second interaction module, configured to perform interaction with a target communication device according to the first processing resource information, the target communication device comprising at least one of the first communication device and a third communication device, wherein
the first processing resource information is used for indicating at least one of the following:
available resource information of the first communication device for running a target algorithm, the target algorithm comprising at least one of a neural network algorithm, an artificial intelligence algorithm, and a machine learning algorithm; and
a target algorithm set supported by the first communication device.

35. An information interaction apparatus, comprising:
a second obtaining module, configured to obtain first interaction information sent by a target communication device, wherein the first interaction information comprises at least one of second processing resource information and target algorithm recommendation information, the second processing resource information being used for indicating resource information of a first communication device for running a target algorithm, and the target communication device comprises at least one of a second communication device and the first communication device; and
a third interaction module, configured to perform information interaction with the target communication device according to the first interaction information.

36. A communication device, comprising a processor and a memory, the memory storing a program or instructions executable on the processor, the program or instructions, when executed by the processor, implementing the steps of the information interaction method according to any one of claims 1 to 18, or implementing the steps of the information interaction method according to any one of claims 19 to 30, or implementing the steps of the information interaction method according to any one of claim 31 or 32.

37. A readable storage medium, storing a program or instructions, the program or instructions, when executed by a processor, implementing the steps of the information interaction method according to any one of claims 1 to 18, or implementing the steps of the information interaction method according to any one of claims 19 to 30, or implementing the steps of the information interaction method according to any one of claim 31 or 32.
